# EUROPÄISCHE PATENTSCHRIFT

(11) **EP 1 295 467 B1**
(45) Veröffentlichungstag und Bekanntmachung des Hinweises auf die Patenterteilung: **21.01.2004**
(21) Anmeldenummer: 01940562.0
(22) Anmeldetag: 11.06.2001
(51) Int. Cl.: H04N 5/00, H04N 7/16

(54) **KODIERUNG VON PARAMETERWERTEN**
CODING OF PARAMETER VALUES
CODAGE DE VALEURS PARAMETRIQUES

(30) Priorität: 20.06.2000 DE 10029318; 23.02.2001 DE 10108919
(43) Veröffentlichungstag der Anmeldung: 26.03.2003
(73) Patentinhaber: Fraunhofer-Gesellschaft zur Förderung der angewandten Forschung e.V., 80686 München (DE); Deutsche Telekom AG, 53113 Bonn (DE)
(72) Erfinder: HEUER, André, 85386 Eching (DE); BARTEL-KURZ, Birgit, 91054 Erlangen (DE); PLANKENBÜHLER, Roland, 90475 Nürnberg (DE); GERHÄUSER, Heinz, 91344 Waischenfeld (DE); LAKOMY, Rolf, 48308 Senden (DE)
(74) Vertreter: Schoppe, Fritz, Dipl.-Ing.
(86) Internationale Anmeldenummer: PCT/EP2001/006601
(87) Internationale Veröffentlichungsnummer: WO 2001/099409

(56) Entgegenhaltungen:
- EP-A- 0 822 720
- WO-A-98/43426
- WO-A-99/07151
- US-A- 5 345 505
- US-A- 5 559 831
- US-A- 5 978 855

## Beschreibung

Die vorliegende Erfindung bezieht sich auf die Kodierung von Daten, die zumindest einen Parameter mit einem Wert aufweisen, und insbesondere auf die Kodierung von Parameterwerten, wie sie beispielsweise bei Conditional-Access-Systemen als Teilnehmeradressen und Dienst-IDs auftreten.

Conditional-Access-Systeme bzw. Systeme mit bedingtem Zugriff sind Zugriffskontrollsysteme, die beispielsweise zum Empfang von gebührenpflichtigen Pay-TV- oder Media-Diensten eingesetzt werden. Bei diesen Conditional-Access-Systemen werden von einer zentralen Sendeeinrichtung oder mehreren dezentralen Sendestellen Daten, wie z.B. gebührenpflichtige TV-Programme, über ein geeignetes Übertragungssystem, wie z.B. Rundfunk, an angeschlossene Endgeräte, wie z.B. Pay-TV-Decoder oder mobile Empfangsgeräte, verteilt. Um den Zugriff auf die bereitgestellten Dienste durch Unbefugte zu verhindern, ist bei diesen Systemen eine Zugriffssteuerung vorgesehen.

Die Zugriffssteuerung erfolgt bei modernen Conditional-Access-Systemen fast ausschließlich auf der Basis von sogenannten Smartcards in Chipkartentechnologie, wobei die Smartcards zur Speicherung eines Sicherheitsalgorithmus und von Teilnehmer- bzw. Subcriber-spezifischen Dienstempfangsberechtigungen dienen.

Die Smartcards bzw. intelligenten Karten sind in den meisten Fällen nicht fest mit einem Endgerät verbunden, sondern können aus diesem entfernt und ausgetauscht werden, wie es beispielsweise bei Pay-TV-Smartcards der Fall ist. Diesbezüglich wird auf die Veröffentlichung in Bernd Seiler (Hrsg.): Taschenbuch der Telekompraxis 1996, Schiele & Schön, Berlin 1996, Jörg Schwenk: "Conditional Access oder Wie kann man den Zugriff auf Rundfunksendungen kontrollieren?" verwiesen.

Ein Problem bei Conditional-Access-Systemen besteht darin, dass ein Service-Provider bzw. Dienstlieferant die bereitgestellten Dienste lediglich für ausgewählte Kunden, die zum Empfang, des Dienstes autorisiert sind, zugänglich machen will. Autorisierte Kunden sind solche Kunden, die bestimmte definierte Bedingungen durch den Erwerb von Berechtigungen erfüllen. Die Abwicklung derartiger Berechtigungen erfolgt in der Regel über dasselbe Datenübertragungssystem, über das die Dienste an die Endgeräte verteilt werden. Allgemein stellt sich das Problem, dass der Zugriff auf bestimmte, über diese Datenübertragungssysteme verbreitete Informationen kontrolliert werden soll, dass dieselben aber grundsätzlich von jedermann empfangen werden können.

Dienste, die gegen unberechtigte Zugriffe geschützt werden sollen, können gebührenpflichtig sein oder geheime Informationen enthalten, die vor Missbrauch geschützt werden sollen. Beispiele für solche Dienste sind Hörfunk- oder TV-Programme, digitale Datenzusatzdienste, wie z.B. bei Rundfunksystemen, Informationsdienste, wie z.B. im Internet, Wirtschafts-TV-Dienste oder allgemeine Daten, wie sie beispielsweise bei Funk- oder Leiter-gebundenen Übertragungssystemen vorkommen. Diese Dienste werden sendeseitig in einem Encoding- bzw. Kodier-System verschlüsselt, versendet und in einem Endgerät mit einem entsprechenden Decoding- bzw. Dekodiersystem entschlüsselt.

Bei den Conditional-Access-Systemen werden neben den verschlüsselten Diensten auch EMM- (EMM = Entitlement Management Messages = Berechtigungsverwaltungsmeldungen) und ECM- (ECM = Entitlement Control Messages = Berechtigungsteuerungsmeldungen) Nachrichten übertragen. EMM-Nachrichten können dazu dienen, Dienste freizuschalten, zu sperren oder zu verlängern, während ECM-Meldungen dazu dienen können, neue Schlüssel an eine Entschlüsselungseinrichtung bzw. einen Descrambler eines Endgerätes zu übertragen.

Eine EMM- bzw. eine ECM-Nachricht kann aus mehreren Datenfeldern bestehen, die dann jeweils als Parameter einer Nachricht zu interpretieren sind. Bei einer Dienstfreischaltung können in einer EMM-Nachricht beispielsweise die Adresse des entsprechenden Dienstkunden bzw. Subscribers, dessen Dienst freigeschaltet werden soll, die ID- bzw. IdentifikationsNummer des Dienstes und weitere Parameter kodiert sein. Die Anzahl der Parameter und deren Kodierung in einer EMM- bzw. ECM-Nachricht sind abhängig von dem jeweiligen Conditional-Access-System, von den Anforderungen des jeweiligen Dienstlieferanten (Service Provider) und von der Dienststruktur.

Bei heute eingesetzten Conditional-Access-Systemen weisen alle Datenfelder der EMM- bzw. ECM-Nachrichten eine feste Länge bzw. Stellenzahl auf. Zur Kodierung der Teilnehmeradresse kann beispielsweise ein Vier-Byte-Wert verwendet werden. Die Länge bzw. Stellenzahl solcher fest definierter Datenfelder ist für einen späteren Zeitpunkt, d.h. einen Zeitpunkt nach der Einführung des Systems auf dem Markt, nicht mehr änderbar, da die Endgeräte bei der Dekodierung der EMM- bzw. ECM-Nachrichten auf die Länge der Datenfelder abgestimmt sind. Die Definition der festen Länge eines Datenfeldes, wie z.B. für die Teilnehmeradresse, ist deshalb meistens ein Kompromiss aus einem möglichst großen Wertebereich für das entsprechende Datenfeld und einer möglichst kurzen EMM- bzw. ECM-Gesamtnachrichtenlänge. In dem Fall der Teilnehmeradressen muss die Länge des Datenfeldes beispielsweise möglichst groß sein, da die Teilnehmeranzahl nicht vorhersagbar ist. Ist der Wertebereich zu klein gewählt worden, und übersteigt zu einem späteren Zeitpunkt die Teilnehmerzahl den Wertebereich, sind neue Teilnehmer nicht mehr adressierbar bzw. kodierbar. Andererseits sollte die Länge des Datenfeldes möglichst klein sein, um die Gesamtlänge der Nachrichten möglichst klein zu halten und dadurch die für die Übertragung der Nachrichten notwendige Kanalkapazität gering zu halten.

Ein Nachteil der im Vorhergehenden beschriebenen üblichen Conditional-Access-Systeme besteht folglich darin, dass die feste Länge der Datenfelder einen Wertebereich kodierbar machen, der größer ist als derjenige, der zu dem jeweiligen Zeitpunkt notwendig wäre. Das Problem wird bei den EMM-Nachrichten zusätzlich dadurch verstärkt, dass dieselben häufig an eine Mehrzahl von Teilnehmern einzeln verteilt werden müssen, so dass die zu dem jeweiligen Zeitpunkt unbenutzten Bits, die für zukünftige Systemerweiterungen vorgesehen sind, die Übertragungskapazität des Übertragungssystems mehrfach, d.h. pro adressiertem Teilnehmer, belasten können.

Die Aufgabe der vorliegenden Erfindung besteht darin, Verfahren und Vorrichtungen zum Kodieren bzw. Dekodieren zu schaffen, so dass Parameter in Nachrichten eines Zugriffskontrollsystems effizienter kodiert werden können.

Diese Aufgabe wird durch ein Verfahren gemäß Anspruch 1 oder 15 und einer Vorrichtung gemäß Anspruch 8 oder 18 gelöst.

Ein erfindungsgemäßes Verfahren zum Kodieren von Daten, die zumindest einen Parameter mit einem Wert aufweisen, umfasst das Definieren zumindest zweier Wertebereiche für den Wert des Parameters, wobei jedem Wertebereich eine Stellenzahl zugeordnet ist. Der Parameterwert wird in ein erstes Bitwort mit der Stellenzahl, die dem Wertebereich zugeordnet ist, in dem der Parameterwert liegt, kodiert. Es ist ferner das Hinzufügen eines zweiten Bitworts, das den Wertebereich anzeigt, in dem der Parameterwert liegt, zu dem ersten Bitwort vorgesehen, um ein Codewort für den Parameter zu erzeugen.

Eine erfindungsgemäße Vorrichtung zum Kodieren von Daten, die zumindest einen Parameter mit einem Wert aufweisen, umfasst eine Einrichtung zum Definieren zumindest zweier Wertebereiche für den Wert des Parameters, wobei jedem Wertebereich eine Stellenzahl zugeordnet ist. Die Vorrichtung umfasst ferner eine Einrichtung zum Kodieren des Parameterwerts in ein erstes Bitwort mit der Stellenzahl, die dem Wertebereich zugeordnet ist, in dem der Parameterwert liegt. Es ist ferner eine Einrichtung zum Hinzufügen eines zweiten Bitworts, das den Wertebereich anzeigt, in dem der Parameterwert liegt, zu dem ersten Bitwort zum Erzeugen eines Codeworts für den Parameter vorgesehen.

Ein erfindungsgemäßes Verfahren zum Dekodieren von kodierten Daten, die zumindest ein Codewort für zumindest einen in den Daten umfassten Parameter mit einem ersten und einem zweiten Bitwort aufweisen, wobei in das erste Bitwort der Wert des zumindest einen Parameters kodiert ist, wobei der Parameter in einem Wertebereich von zumindest zwei Wertebereichen des Parameters liegt, wobei jedem Wertebereich eine Stellenzahl zugeordnet ist, und wobei das zweite Bitwort dem ersten Bitwort hinzugefügt ist und den Wertebereich angibt, in dem der Parameterwert liegt, umfasst das Ermitteln des angegebenen Wertebereichs aus dem zweiten Bitwort sowie das Bestimmen des Werts des Parameters in dem ermittelten Wertebereich aus dem ersten Bitwort.

Eine erfindungsgemäße Vorrichtung zum Dekodieren von kodierten Daten, die zumindest ein Codewort für zumindest einen in den Daten umfassten Parameter mit einem ersten und einem zweiten Bitwort aufweisen, wobei in das erste Bitwort der Wert zumindest eines Parameters kodiert ist, wobei der Parameter in einem Wertebereich von zumindest zwei Wertebereichen des Parameters liegt, wobei jedem Wertebereich eine Stellenzahl zugeordnet ist, und wobei das zweite Bitwort dem ersten Bitwort hinzugefügt ist und den Wertebereich angibt, in dem der Parameterwert liegt, umfasst eine Einrichtung zum Ermitteln des angegebenen Wertebereichs aus dem zweiten Bitwort sowie eine Einrichtung zum Bestimmen des Werts des Parameters in dem ermittelten Wertebereich aus dem ersten Bitwort.

Der vorliegenden Erfindung liegt die Erkenntnis zugrunde, dass die zur Kodierung eines Parameterwerts erforderliche Stellenzahl reduziert werden kann, indem dem Bitwort, in das der Parameterwert kodiert werden soll, ein weiteres Bitwort hinzugefügt wird. Das hinzugefügte Bitwort kann dazu verwendet werden, die Stellenzahl des Bitworts, in dem der Parameterwert kodiert ist, an den Wert des Parameters anzupassen, so dass zur Kodierung des Parameters nicht immer eine maximale Stellenzahl erforderlich ist, die dazu ausgelegt ist, zukünftige Systemerweiterungen bis zu einem bestimmen Maß zu ermöglichen. Obwohl folglich dem eigentlichen Bitwort, also demjenigen, das den Parameterwert speichert, ein weiteres Bitwort hinzugefügt wird, wird insgesamt eine effizientere Kodierung für Parameter geliefert.
Gemäß einem Ausführungsbeispiel weisen die zumindest zwei Wertebereiche keinen gemeinsamen Wert auf und decken zusammen einen zusammenhängenden Bereich von aufeinanderfolgenden Werten ab. Auf diese Weise werden Überschneidungen der Wertebereiche vermieden. Das zweite Bitwort kann eines aus einer Mehrzahl von Präfixen mit unterschiedlicher Stellenzahl sein, wobei keines der Mehrzahl von Präfixen Vorsilbe eines anderen der Mehrzahl von Präfixen ist, bzw. kein Präfix den höchstwertigen Stellen eines anderen Präfixes entspricht. Jedem der zumindest zwei Wertebereiche ist eines der Mehrzahl von Präfixen zugeordnet, wobei die Stellenzahl jedes der Mehrzahl von Präfixen angibt, in dem wievielten Wertebereich relativ zu dem Wertebereich mit den kleinsten Werten sich der Wert des Parameters befindet. Durch diese Präfigierung bzw. das Versehen mit einem Präfix wird eine Systemerweiterung auf beliebig hohe Parameterwerte ermöglicht, da zu jedem weiteren Wertebereich ein Präfix existiert, zu dem kein anderes Präfix eine Vorsilbe ist.

Gemäß einem weiteren Ausführungsbeispiel sind die Daten eine Meldung eines Conditional-Access-Systems, wobei der zumindest eine Parameter eine Teilnehmeradresse, eine Dienst-ID, eine Single-Chipmodul-Adresse oder ein Attribut aufweist. In dem Fall von Conditional-Access-Systemen wird es ermöglicht, dass die Länge von EMM- bzw. ECM-Nachrichten dynamisch skaliert wird, und dass hierdurch ein Conditional-Access-System entsprechend den aktuellen Bedingungen, wie z.B. einer steigenden Teilnehmeranzahl, angepasst wird. Werden bei einem Rundfunk- bzw. Broadcast-System zu einem bestimmten Zeitpunkt beispielsweise lediglich zwei verschiedene Dienste angeboten, so ist für die Kodierung der Dienste lediglich ein Bit erforderlich. Werden bei dem Rundfunksystem weitere Dienste angeboten, .kann die Codelänge dynamisch erhöht werden. Hieraus ergeben sich für Conditional-Access-Systeme zwei wesentliche Neuerungen. Zum einen werden für die Kodierung einer Nachricht nur so viele Datenbits verwendet, wie zur Kodierung der Informationen in der Nachricht erforderlich sind, was bedeutet, dass die Nachrichtenlänge immer auf ein Minimum reduziert wird. Zum anderen kann das Conditional-Access-System dynamisch an die Anforderung der Applikation bzw. Anwendung angepasst werden. Für Anwendungen mit geringer Bandbreite und einfacher Dienststruktur können beispielsweise sehr kurze Nachrichten kodiert werden, während bei steigender Bandbreite oder steigender Anzahl von Teilnehmern oder Diensten die Nachrichtenkodierung entsprechend neu skaliert werden kann.

Gegenüber den herkömmlichen im TV-Bereich eingesetzten Conditional-Access-Systemen, weist ein Conditional-Access-System, bei dem die vorliegende Erfindung implementiert ist, insbesondere die Vorteile auf, dass eine Anpassung an die in unterschiedlichen Datenübertragungssystemen verfügbare Übertragungskapazität und eine Skalierbarkeit des Conditional-Access-Systems bezüglich der Teilnehmer- und Dienstanzahl möglich ist.

Die erwähnten Vorteile ermöglichen bezüglich der Teilnehmerverwaltung auch dann eine ökologische und effiziente Anwendung des Conditional-Access-Systems zur Dienstverschlüsselung, wenn zur Übertragung hochwertiger Dienste an eine große Teilnehmeranzahl nur eine geringe Datenübertragungsrate zur Verfügung steht, oder die Übertragung eines oder mehrerer Dienste an eine kleine Anzahl von Teilnehmern vorgesehen ist. Anders ausgedrückt ermöglicht es die vorliegende Erfindung, dass bei Conditional-Access-Systemen Nachrichten, die an Teilnehmer bzw. an Sicherheitsmodule, wie z.B. eine Chipkarte, übertragen werden, durch Bitraten-optimierte Kodierung so minimiert werden, dass ein Einsatz des darauf angepassten Conditional-Access-Systems geeignet ist, ohne Sicherheitseinbußen auch in solchen Funk- oder Festleiter-gebundenen Datenübertragungssystemen, wie z.B. Rundfunk oder Internet, effizient eingesetzt zu werden, die nur geringe Datenübertragungsraten aufweisen, oder in Fällen eingesetzt zu werden, in denen Dienstlieferanten aus wirtschaftlichen Gründen nur über begrenzte Datenraten verfügen.

Gemäß einem weiteren Ausführungsbeispiel entspricht die Anzahl von Werten jedes der zumindest zwei Wertebereiche der maximal darstellbaren Anzahl von Werten, die durch ein Bitwort mit der zugeordneten Stellenzahl kodiert werden können. Auf diese Weise wird die Kodierung des Parameters innerhalb eines Wertebereichs optimiert.

Gemäß einem weiteren Ausführungsbeispiel wird die Kodierung des Parameterwerts in das erste Bitwort durchgeführt, indem eine Differenz zwischen dem Parameterwert und einem kleinsten Wert des Wertebereichs, in dem der Parameterwert liegt, gebildet und die gebildete Differenz in dem ersten Bitwort mit der dem Wertebereich zugeordneten Stellenzahl dargestellt wird.

Gemäß einem weiteren Ausführungsbeispiel sind die Daten eine Meldung eines Conditional-Access-Systems bzw. eines Zugriffskontrollsystems, wobei dasselbe eine Mehrzahl von Teilnehmern aufweist, deren Adressen in einer mehrdimensionalen Teilnehmermatrix angeordnet sind. Jede Adresse ist durch einen Index pro Dimension der Teilnehmermatrix definiert, wobei die Länge der Teilnehmermatrix entlang einer Dimension variabel ist. Der zumindest eine Parameter ist eine Teilnehmeradresse, und das Codewort weist einen Teil mit fester Stellenzahl und einen Teil mit variabler Stellenzahl auf. Der Index für die Dimension mit variabler Länge ist der Teil des Codeworts, der eine variable Stellenzahl aufweist, wobei die restlichen Indizes den anderen Teil desselben bilden.

Weiterbildungen der vorliegenden Erfindung ergeben sich aus den Unteransprüchen, wobei nicht darauf hingewiesen werden muss, dass Weiterbildungen bezüglich der Kodierung jeweils auch analog für die Dekodierung gelten.

Bevorzugte Ausführungsbeispiele der vorliegenden Erfindung werden nachfolgend bezugnehmend auf die beiliegenden Zeichnungen näher erläutert. Es zeigen:
- Fig. 1: ein Blockdiagramm eines Systems, bei dem die vorliegende Erfindung anwendbar ist;
- Fig. 2: ein Blockdiagramm einer Vorrichtung zum Kodieren von Daten, die zumindest einen Parameter aufweisen, gemäß einem Ausführungsbeispiel der vorliegenden Erfindung;
- Fig. 3: eine Skizze, die den Aufbau eines durch die Vorrichtung von Fig. 2 erzeugten Codeworts veranschaulicht;
- Fig. 4: eine Skizze, die die Anordnung der Wertebereiche gemäß einem speziellen Ausführungsbeispiel der vorliegenden Erfindung darstellt;
- Fig. 5: ein Blockdiagramm einer Vorrichtung zum Dekodieren von kodierten Daten gemäß einem Ausführungsbeispiel der vorliegenden Erfindung.
- Fig. 6: eine Skizze, anhand der die Funktionsweise einer Vorrichtung zur Adressierung von Teilnehmern gemäß einem Ausführungsbeispiel der vorliegenden Erfindung beschrieben wird; und
- Fig. 7: eine Skizze, die die Adressierung von Teilnehmern und den Aufbau einer Teilnehmeradressmatrix gemäß dem Ausführungsbeispiel von Fig. 6.

Zunächst wird im folgenden ein Conditional-Access-System beschrieben, bei dem die vorliegende Erfindung vorteilhaft angewendet werden kann. Das Conditional-Access-System, das beispielsweise zur gesteuerten Übertragung von gebührenpflichtigen Pay-TV-Programmen eingesetzt wird, umfasst eine zentrale Sendeeinrichtung 10 sowie eine Empfangseinrichtung 20, wie z.B. einen Decoder. Die zentrale Sendeeinrichtung 10 und die Empfangseinrichtung 20 sind über ein Datenübertragungssystem 30 verbunden, wie z.B. über Rundfunk, ein Glasfasernetz oder andere drahtlose oder drahtgebundene Übertragungssysteme. Die zentrale Sendeeinrichtung 10 umfasst eine Kodier/Verschlüsselungs-Einrichtung 40, während die Empfangseinrichtung 20 eine Dekodier/Entschlüsselungs-Einrichtung 50 umfasst. Die Sendeeinrichtung 10 sendet über das Datenübertragungssystem 30 durch die Kodier/Verschlüsselungs-Einrichtung 40 kodierte bzw. verschlüsselte Daten 60 an die Empfangseinrichtung 20, bei der die kodierten bzw. verschlüsselten Daten 60 durch die Dekodier/Entschlüsselungs-Einrichtung 50 dekodiert bzw. entschlüsselt werden. Die verschlüsselten Daten 60 sind beispielsweise verschlüsselte TV-Programme. Der zur Entschlüsselung erforderliche kryptographische Schlüssel ist auf einer Smyrtcard 70, wie z.B. einer Pay-TV-Smartcard, gespeichert, die über eine geeignete Vorrichtung 80, wie z.B. einen Kartenleser, in den die Smartcard 70 austauschbar eingefügt ist, mit der Dekodier/Entschlüsselungs-Einrichtung 50 verbunden ist, wobei anstatt einer Smartcard ferner ein beliebiges Single-Chipmodul verwendet werden kann.

Nachdem im Vorhergehenden der Aufbau des Conditional-Access-Systems beschrieben worden ist, wird im folgenden kurz die Funktionsweise desselben beschrieben. Die zentrale Sendeeinrichtung 10 verteilt über das Datenübertragungssystem 30 verschlüsselte Daten 60 an eine Mehrzahl von Empfangseinrichtungen 20. Die sendeseitige Verschlüsselung wird durch die kodier/Verschlüsselungs-Einrichtung 40 durchgeführt. Die empfangsseitige Entschlüsselung wird durch die Dekodier/Entschlüsselungs-Einrichtung 50 durchgeführt, wobei der kryptographische Schlüssel, der zur Entschlüsselung der Daten 60 erforderlich ist, in Form eines Kontrollworts auf der Smartcard 70 gespeichert ist, und dort von der Dekodier/Entschlüsselungs-Einrichtung 50 gelesen werden kann. Auf diese Weise ist sichergestellt, dass lediglich Besitzer mit einer geeigneten Smartcard die verschlüsselten Daten, die die bereitgestellten Dienste darstellen, empfangen können.

Neben der Verteilung der eigentlichen Daten bzw. Dienste ist die zentrale Sendeeinrichtung 10 ferner für die Verwaltung der Teilnehmer zuständig. Diese Teilnehmerverwaltung bei dem Conditional-Access-System umfasst solche Aufgaben wie z.B. die Verwaltung von Systemadressen, die Freischaltung, Änderung, wie z.B. Verlängerung, und Sperrung von Empfangsberechtigungen sowie die Verwaltung der Teilnehmeradressen. Um diese Aufgaben durchführen zu können, ist jede Komponente des Conditional-Access-Systems durch eine individuelle Adresse adressierbar. Die verschiedenen Adressen des Systems umfassen die Adresse des Single-Chipmoduls 70, die von dem jeweiligen Hersteller einmalig vergeben wird, die Adresse des Dienstproviders bzw. der zentralen Sendeeinrichtung 10, die in der Regel von dem Betreiber des Conditional-Access-Systems eindeutig vergeben wird, die Dienstadressen, die von dem Dienstprovider vergeben und innerhalb der Dienste des Providers eindeutig sind, und die Teilnehmeradresse, die einem Teilnehmer innerhalb des Dienstes eindeutig zugeordnet ist. Jeder Teilnehmer kann innerhalb des Systems durch die Angabe der Smartcard-Adresse, der Dienstadresse und der Teilnehmeradresse eindeutig adressiert werden, die neben dem kryptographischen Schlüssel und Dienstberechtigungen ebenfalls auf der Smartcard 70 gespeichert sind.

Zur Durchführung der Teilnehmerverwaltung werden mittels der eindeutigen Adressierung neben den Diensten bzw. den verschlüsselten Daten 60, die im folgenden als nicht weiter veränderbare, verschlüsselte Nutzdaten bezeichnet werden, beispielsweise Berechtigungsmeldungen gezielt an eine bestimmte oder mehrere bestimmte Smartcards übertragen, wobei die Berechtigungsmeldungen verschlüsselt oder unverschlüsselt sein können. Beispiele für Daten, die in Berechtigungsmeldungen an Teilnehmer versendet werden, sind
1. regelmäßig übertragene Kontrollwörter zur Dienstentschlüsselung sowie von Bedingungen, unter denen ein Dienst von einem Teilnehmer empfangen werden darf,
2. Meldungen zur Freischaltung oder Sperrung von Diensten,
3. Meldungen zur Aussendung von Dienstverlängerungen,
4. Meldungen, die Änderungen von Zugriffskontrollmodi, wie z.B. einem Abonnement, einer Zahlung pro Nutzung oder einer Zahlung pro Zeitdauer enthalten,
5. Mitteilungen von Dienständerungen, und
6. sonstige Meldungen, die an einzelne Teilnehmer oder an eine Gruppe von Teilnehmern gerichtet sind.

Diese Meldungen können an einzelne Dienstteilnehmer bzw. Subscriber oder an eine Gruppe von Teilnehmern gerichtet sein. Die Meldungen können nach Berechtigungssteuerungsmeldungen (ECM) und in Berechtigungsverwaltungsmeldungen (EMM) unterschieden werden, wobei die ECM-Nachrichten die erste der im Vorhergehenden aufgelisteten Art von Berechtigungsmeldungen, d.h. die regelmäßige Übertragung von Kontrollwörtern, aber auch die Sperrung von Diensten betreffen können, während die EMM-Nachrichten die restlichen Berechtigungsmeldungsarten betreffen.

Wie es im Vorhergehenden erwähnt wurde, werden die Daten 60 verschlüsselt, indem die Daten durch einen Verschlüsselungsalgorithmus mittels Kontrollwörtern verschlüsselt werden. Da die ECM-Nachrichten verschlüsselt an alle Kunden übertragen werden, müssen alle autorisierten Kunden den gleichen Schlüssel zum Entschlüsseln des Kryptogramms in gespeicherter Form auf ihrer Smartcard 70 aufweisen. Die Kontrollwörter werden in relativ kurzen Abständen ausgetauscht, um das Erkennen von Verschlüsselungsmustern für potentielle Angreifer unmöglich, zu machen. Hierzu werden dieselben in ECM-Nachrichten an die Anfangseinrichtung 20 übertragen und in der Smartcard 70 gespeichert. In ECM-Nachrichten werden neben neuen Kontrollwörtern der Empfangseinrichtung 20 oder Sperrmeldungen auch die Bedingungen mitgeteilt, unter denen die Dienste oder Daten 60 empfangen werden dürfen. Jedem Dienst sind ein Kontrollwort und bestimmte Empfangsbedingungen zugeordnet. Die ECM-Nachrichten sind daher jedem einer Mehrzahl von Diensten getrennt zugeordnet.

EMM-Nachrichten sind an spezielle Teilnehmer gerichtet, um beispielsweise Empfangsberechtigüngen, die in der Smartcard 70 gespeichert sind, zu setzen oder zu ändern. Die EMM-Nachrichten müssen folglich an die individuelle Adresse bzw. die Teilnehmeradressen des Kunden, die auf der Smartcard 70 gespeichert ist, übertragen werden. Um die Kundenadressen und EMM-Nachrichten gegen Veränderungen zu schützen, und um sicherzustellen, dass lediglich der Dienstprovider bzw. die zentrale Sendeeinrichtung 10 EMM-Nachrichten erzeugen kann, kann, da die individuellen Adressen in den EMM-Nachrichten in unverschlüsselter Form vorliegen, ein Vervielfältigungsschutz nur über ergänzende Informationen erreicht werden, die in der Smartcard 70 unauslesbar gespeichert sind. Diese ergänzenden Informationen umfassen einen persönlichen Schlüssel, der mit der Kundenadresse bzw. der Teilnehmeradresse verknüpft ist. Da EMM-Nachrichten nicht fest mit dem Dienst-Inhalt sondern mit der logischen Adresse der Smartcard 70 verknüpft sind, können EMM-Nachrichten an einzelne Kunden oder an Gruppen von Kunden bzw. Teilnehmern gerichtet sein.

Die Teilnehmer des Conditional-Access-Systems können nach unterschiedlichen Gesichtspunkten gruppiert werden, wie z.B. nach der Gruppe von Teilnehmern gleicher Dienste, der Gruppe von Teilnehmern gleicher Zugriffsmodi, wie z.B. Abonnement, Zahlung pro Nutzung, Zahlung pro Programm, der Gruppe von Teilnehmern gleicher Interessen, wie z.B. Sport-TV, Spielfilm-TV, und der Gruppe von Teilnehmern gleicher Altersstufe. Bei der Gruppenbildung sind auch Kombinationen unterschiedlicher Gruppen möglich, wobei die größtmögliche Gruppe alle Teilnehmer des Conditional-Access-Systems umfasst.

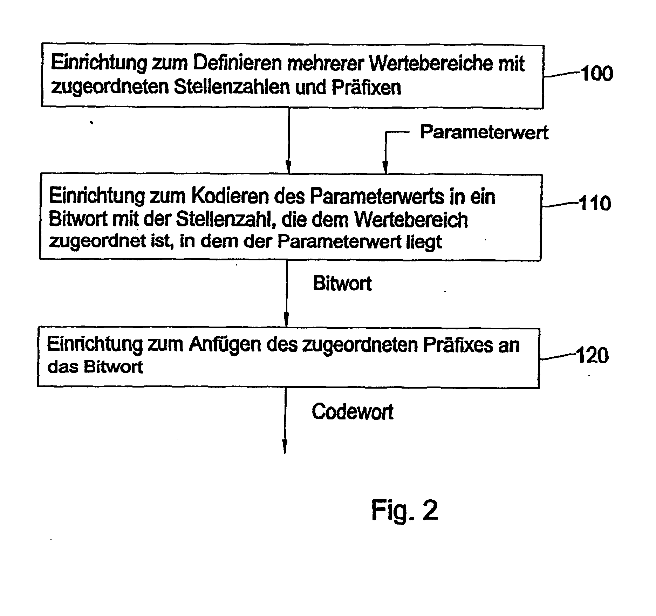

Nachdem im Vorhergehenden der allgemeine Aufbau des Conditional-Access-Systems und dessen Funktionsweise beschrieben worden ist, wird im Folgenden bezugnehmend auf Fig. 2 eine Vorrichtung zur Kodierung von Daten, die einen Parameter enthalten, gemäß einem Ausführungsbeispiel der vorliegenden Erfindung beschrieben, wobei diese Vorrichtung vorteilhaft bei der zentralen Sendeeinrichtung 10 verwendet werden kann, um einerseits die Länge von EMM- bzw. ECM-Nachrichten zu verkürzen und andererseits den vergebenen Bereich von Systemparametern bzw. -adressen zu erweitern, und wobei diese Vorrichtung in Software, Firmware oder Hardware implementieret sein kann.

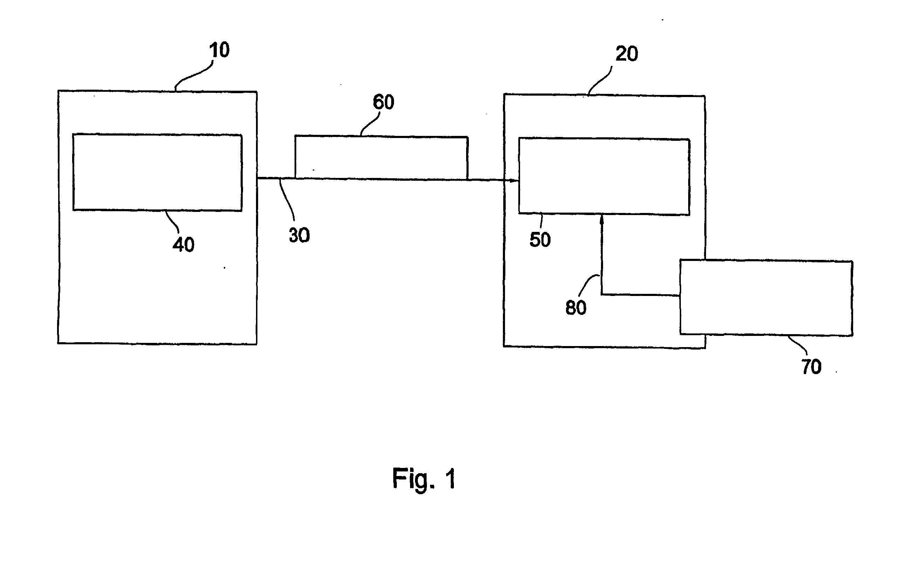

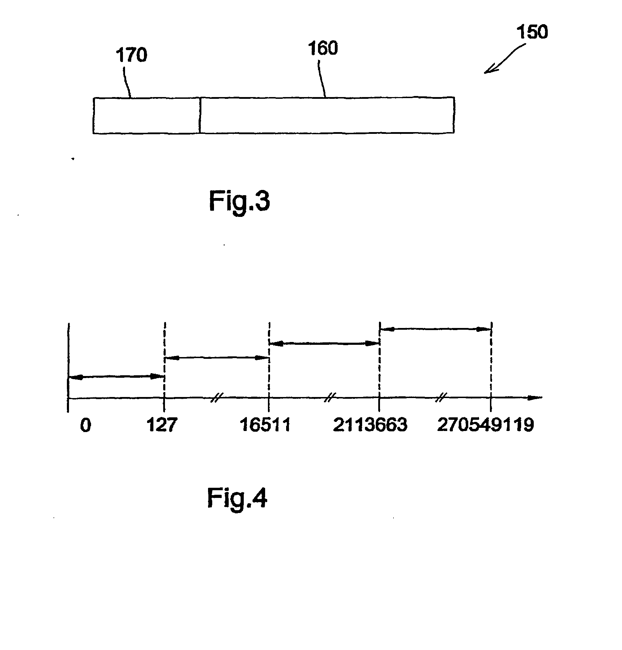

Wie es in Fig. 2 gezeigt ist, umfasst die Vorrichtung, die beispielsweise in der Kodier/Verschlüsselungs-Einrichtung 40 von Fig. 1 integriert sein kann, eine Einrichtung 100 zum Definieren mehrerer Wertebereiche mit zugeordneten Stellenzahlen und Präfixen, eine Einrichtung 110 zum Kodieren des Parameterwerts in ein Bitwort mit der Stellenzahl, die dem Wertebereich zugeordnet ist, in dem der Parameterwert liegt, und eine Einrichtung 120 zum Anfügen des zugeordneten Präfixes an das Bitwort. Die Kodiereinrichtung 110 empfängt von der Definierungseinrichtung 100 die Informationen über die Wertebereiche und die zugeordneten Stellenzahlen und Präfixe. Die Kodiereinrichtung 110 gibt den Parameterwert kodiert in einem Bitwort aus, wobei das Bitwort eine Stellenzahl aufweist, die dem Wertebereich zugeordnet ist, in dem der Parameterwert liegt. Die Anfügeeinrichtung 120 empfängt das Bitwort von der Kodiereinrichtung 110 und fügt dem Bitwort das Präfix hinzu, das dem Wertebereich zugeordnet ist, in dem der Parameterwert liegt, und gibt das Bitwort mit dem hinzugefügten Präfix als Codewort aus. Durch die Definition von mehreren Wertebereichen ist die Stellenzahl des Codeworts an den Wert des Parameters anpassbar, so dass durch die Umwandlung des Parameterwerts in ein Codewort die Kodierlänge verkürzt werden kann. Der Parameter kann beispielsweise die Teilnehmeradresse, die Dienst-ID, ein Attribut, eine Smartcard- bzw. Single-Chipmodul-Adresse usw., die in einer EMM- oder ECM-Nachricht, enthalten ist, sein. In dem Fall, dass der Parameterwert eine Teilnehmer-Adresse in einer EMM-Nachricht ist, bewirkt die Umwandlung der Teilnehmeradresse in ein Codewort, dass zur Übertragung der EMM-Nachricht weniger Bits erforderlich sind, wodurch die für den Dienst verfügbare Übertragungskapazität weniger belastet wird. In Fig. 3 ist der Aufbau eines Codeworts 150 gezeigt, wie es sich durch die Verwendung der in Fig. 2 gezeigten Vorrichtung ergibt: Wie es gezeigt ist, besteht das Codewort 150 aus einem Bitwort 160 und einem Präfix 170.

Im Folgenden wird anhand von Tabelle 1 ein spezielles Beispiel für einen Satz von einander zugeordneten Wertebereichen, Präfixen und Stellenzahlen bzw. Bitlängen für einen Parameterwert geliefert, wie sie von der Definierungseinrichtung 100 definiert sein können, wobei in der ersten Spalte verschiedene Präfixe, in der zweiten Spalte die jeweils zugeordneten Bitlängen bzw. Stellenzahlen und in der dritten Spalte der jeweils zugeordnete Wertebereich angegeben sind.

**Tabelle 1**

| Präfix | Bitlänge des Parameterwertes | Wertebereich des Parameterwertes |
|---|---|---|
| 0 | 7 Bit | 0-127 |
| 10 | 14 Bit | 128-16511 |
| 110 | 21 Bit | 16512-2113663 |
| 1110 | 28 Bit | 2113664-270549119 |

Wie es der Tabelle 1 zu entnehmen ist, wird, falls der Wert des Parameters in dem Bereich von 0 bis 127 liegt, der Parameter in ein Codewort mit 8 Bits kodiert, d.h. ein Bit für das Präfix 170 und sieben Bits für das Bitwort 160. Falls der Parameterwert in dem Bereich von 128 bis 16.511 liegt, werden zur Kodierung insgesamt 16 Bits benötigt. Dementsprechend werden in den Fällen, dass der Parameterwert in dem Bereich von 16.512 bis 2.113.663 bzw. in dem Bereich von 2.113.664. bis 270.549.119 liegt, insgesamt 24 Bits bzw. 32 Bits benötigt.

Wie es in der dritten Spalte der Tabelle 1 ersichtlich ist, weisen die Wertebereiche keinen gemeinsamen Wert auf und bilden zusammen einen zusammenhängenden Bereich von aufeinanderfolgenden Werten, in diesem Fall von 0 bis 270.540.119. In Fig. 4 ist die Anordnung der Wertebereiche entlang eines Zahlenstrahls dargestellt, wobei erkennbar ist, dass die Wertebereiche derart angeordnet sind, dass zwischen den Wertebereichen keine Überschneidungen auftreten.

Wie es aus Tabelle 1 ebenfalls ersichtlich ist, ist der in Tabelle 1 gezeigte Satz von Präfixen, Bitlängen und Wertebereichen beliebig erweiterbar. Um dies zu ermöglichen, sind die Präfixe derart ausgewählt, dass kein Präfix, das einem bestimmten Wertebereich zugeordnet ist, Vorsilbe bezüglich eines Präfixes ist, das einem Wertebereich mit größeren Werten zugeordnet ist. Dies bedeutet, dass die höchstwertigen Stellen eines Präfixes niemals einem Präfix eines Wertebereichs mit kleineren Werten entsprechen. In dem vorliegenden Fall werden die Präfixe insbesondere dadurch gebildet, dass sich jedes Präfix von dem Präfix des vorhergehenden Wertebereichs durch das Voranstellen einer Eins an der höchstwertigen Bitposition unterscheidet. In dem vorliegenden Fall würde einem weiteren Wertebereich beispielsweise das Präfix 11110 zugewiesen werden. Zudem gibt die Länge bzw. die Stellenzahl des Präfixes jeweils an, dem wievielten Wertebereich - ausgehend von dem Wertebereich mit den kleinsten Werten - das Präfix zugeordnet ist.

Zudem ist aus Tabelle 1 erkennbar, dass die Anzahl der Werte in den einzelnen Wertebereichen der Anzahl von Werten entspricht, die durch ein Wort der zugeordneten Bitlänge kodiert werden können. Der Wertebereich, der dem Präfix 0 zugeordnet ist, weist beispielsweise 128 Werte auf, was der durch sieben Bits kodierbaren Anzahl (2⁷) entspricht. Außerdem ist aus Tabelle 1 erkennbar, dass sich aufeinanderfolgende Bitlängen um einen konstanten, ganzzahligen Wert, in diesem Fall 7 Bit erhöhen, so dass alle Bitlängen Vielfache desselben sind.

Durch die einfache Struktur der Tabelle 1, wie sie im Vorhergehenden beschrieben wurde, ist insbesondere eine iterative Erweiterung derselben ohne weiteres möglich. Folglich wird beispielsweise bei Anwendung der bezugnehmend auf Tabelle 1 beschriebenen Kodierung auf die Teilnehmeradressen des beschriebenen Conditional-Access-Systems eine Skalierbarkeit bzw. Erweiterbarkeit in Folge von beispielsweise einer zunehmenden Teilnehmeranzahl ermöglicht.

Zur Kodierung eines Parameterwerts wird von der Kodiereinrichtung 110 (Fig. 2) zunächst der Wertebereich bestimmt, in dem der Wert des Parameters liegt. Daraufhin wird die Differenz zwischen dem kleinsten Wert dieses Wertebereichs und des Parameterwerts gebildet, wobei die Differenz in binärer Darstellung mit der Stellenzahl, die dem entsprechenden Wertebereich zugeordnet ist, das Bitwort bildet. Anschließend wird lediglich die Präfigierung mit dem entsprechenden Präfix vorgenommen, nämlich dem Präfix, das dem bestimmten Wertebereich zugeordnet ist. Der Parameterwert 129 würde beispielsweise in ein Codewort 1000000000000001 umgewandelt werden, wobei die Stellenzahl des Codeworts lediglich 16 (2 Bytes) beträgt, während sie bei typischen herkömmlichen Conditional-Access-Systemen den festen Wert 32 (4 Bytes) aufweisen würde.

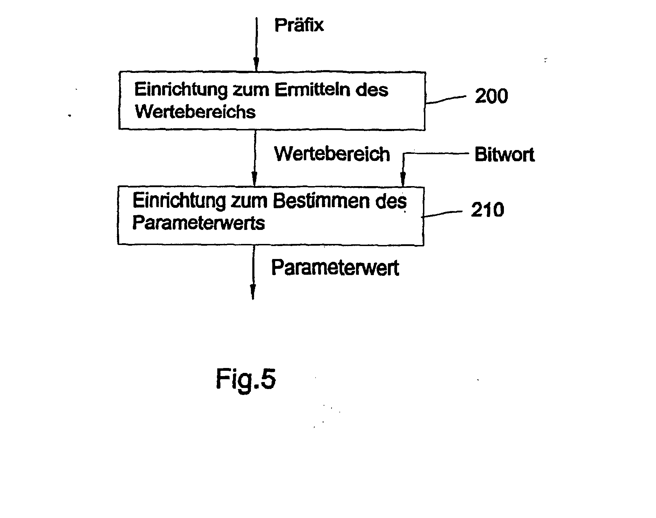

Im folgenden wird nun anhand von Fig. 5 eine erfindungsgemäße Vorrichtung zum Dekodieren von Daten beschrieben, die ein Codewort wie dasjenige, das durch die Vorrichtung von Fig. 2 erzeugt wird, enthalten. Die Dekodiervorrichtung, die beispielsweise in der Dekodier/Entschlüsselungs-Einrichtung 50 integriert sein könnte, umfasst eine Einrichtung 200 zum Ermitteln des Wertebereichs sowie eine Einrichtung 210 zum Bestimmen des Parameterwerts. Die Ermittlungseinrichtung extrahiert aus dem Codewort das Präfix und ermittelt aus demselben den Wertebereich, in dem der in dem Bitwort kodierte Parameterwert liegt. Die Bestimmungseinrichtung 210 empfängt von der Ermittlungseinrichtung 200 den ermittelten Wertebereich, bestimmt den Wert des Parameters innerhalb des ermittelten Wertebereichs aus dem Bitwort des Codewortes und gibt den Parameterwert aus.

In dem Fall, dass das Codewort gemäß Tabelle 1 kodiert worden ist, erkennt die Ermittlungseinrichtung 200 das Ende des Präfixes an dem erstmaligen Auftreten eines Bits 0. Aus dem Präfix kann die Ermittlungseinrichtung 200 die zugeordnete Bitlänge des Bitworts und den zugeordneten Wertebereich ermitteln. Hierzu kann beispielsweise eine Nachschlagtabelle vorgesehen sein, in der zu jedem Präfix eine zugeordnete Bitlänge und ein zugeordneter Wertebereich gespeichert sind, und auf die mittels des Präfixes zugegriffen werden kann. Eine weitere Möglichkeit besteht darin, den im Vorhergehenden beschriebenen, iterativen Aufbau der Präfixe, Bitlängen und Wertebereiche in Tabelle 1 auszunutzen, so dass für die Ermittlungseinrichtung 200 lediglich die Kenntnis des Bitlängenunterschieds zwischen Bitlängen, die aufeinanderfolgenden Wertebereichen zugeordnet sind, erforderlich ist, der in dem Fall von Tabelle 1 sieben Bit beträgt. Ist das empfangene Präfix beispielsweise 110, ermittelt die Ermittlungseinrichtung 200 die zugeordnete Bitlänge durch Berechnung von 3 x 7 = 21 und den zugeordneten Wertebereich durch die Berechnungen von (2⁷ + 2¹⁴) und (2⁷ + 2¹⁴ + 2²¹ -1). Die Bestimmungseinrichtung 210 ermittelt den Parameterwert aus dem Bitwort, indem dieselbe die in dem Bitwort dargestellte Zahl zu dem kleinsten Wert des ermittelten Wertebereichs addiert.

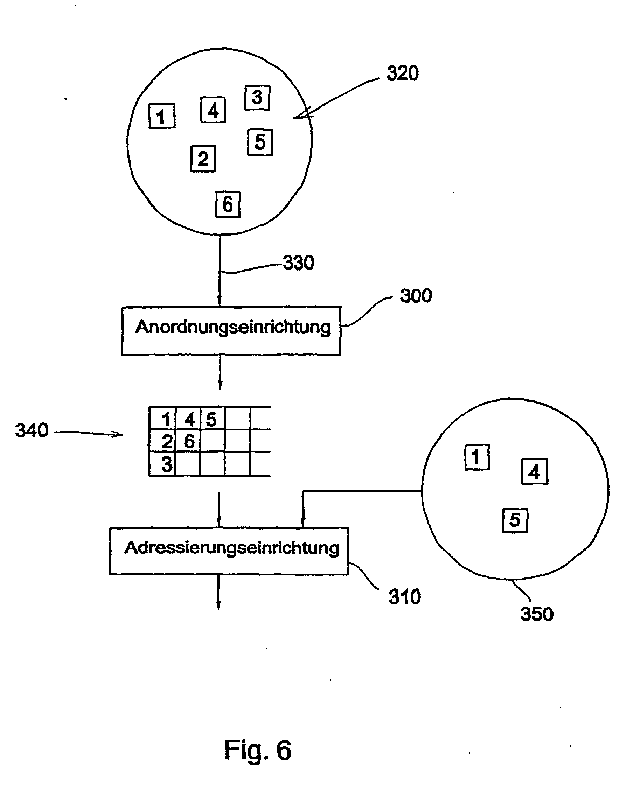

Bezugnehmend auf Fig. 6 wird im folgenden die Funktionsweise einer Vorrichtung zum Adressieren von Teilnehmern gemäß einem weiteren Ausführungsbeispiel der vorliegenden Erfindung beschrieben, die in der zentralen Sendeeinrichtung 10 von Fig. 1 integriert ist, um die Teilnehmerverwaltung bzw. das Teilnehmermanagement zu vereinfachen, und die entweder in Software, Firmware oder Hardware implementiert sein kann. Insbesondere wird die Vorrichtung von Fig. 6 zur Verwaltung der Teilnehmeradressen und zur effizienteren Adressierung von Teilnehmern verwendet.

Wie es in Fig. 6 gezeigt ist, besteht die Vorrichtung aus einer Anordnungseinrichtung 300 sowie einer Adressierungseinrichtung 310. Die Anordnungseinrichtung 300 weist zu jedem Zeitpunkt Informationen darüber auf, welche Teilnehmer in dem Conditional-Access-System vorhanden sind, und welche Attribute, wie z.B. Zugriffsmodus, Alter oder dergleichen, diese Teilnehmer aufweisen. Die Teilnehmer sind in Fig. 6 durch Quadrate 320 dargestellt, die zur Veranschaulichung durchnumeriert sind, wobei ein Pfeil 330 darstellen soll, dass die Anordnungseinrichtung 300 die Informationen über die Teilnehmer 320 aufweist. Die Anordnungseinrichtung 300 ordnet die Teilnehmer in einer Teilnehmeradressmatrix 340 an, wie es im folgenden beschrieben werden wird, und gibt die Informationen der Teilnehmeradressmatrix 340 an die Adressierungseinrichtung 310 weiter. Die Adressierungseinrichtung 310 verwendet die Informationen der Teilnehmeradressmatrix 340, um eine zu adressierende Anzahl von Teilnehmern 350 möglichst effektiv zu adressieren.

In dem in Fig. 6 dargestellten Beispiel sind in die zu adressierenden Teilnehmer 1, 4 und 5 beispielsweise alle in derselben Zeile der Teilnehmeradressmatrix 340 nebeneinander angeordnet, so dass die Angabe der Zeilennummer 1 und der Spaltennummern 1 und 3 (wobei die Zeilen- und Spaltennummern von der oberen linken Ecke aus gezählt werden sollen) ausreichend ist, um anzugeben, von wo bis wo in der Zeile 1 die adressierten Teilnehmer liegen, und somit ausreichend ist, um die gemeinsame Adressierung durchzuführen. In dem einfachsten Fall, bei dem sich lediglich die zu adressierenden Teilnehmer in der entsprechenden Zeile befinden und sonst keiner, wie es in Fig. 6 gezeigt ist, reicht zur gemeinsamen Adressierung die Angabe der Zeilennummer aus. In dem Fall, dass beispielsweise die Teilnehmer 1, 2 und 3 adressiert werden sollen, reicht dementsprechend die Angabe der Spaltennummer aus. In dem Fall, dass die Teilnehmer 1, 2, 4, 6 adressiert werden sollen, reicht es aus, ein Feld zu definieren, wie es beispielsweise durch Angabe zweier Spaltenindizes und zweier Zeilenindizes möglich ist, d.h. der obersten und untersten Zeile sowie der linken äußeren und der rechten äußeren Spalte, oder durch Angabe des oberen linken und des unteren rechten Teilnehmers, die das Feld aufspannen. In jedem dieser Fälle ist statt wie herkömmlich mehrerer Nachrichten lediglich eine Nachricht mit der gemeinsamen Adressierung erforderlich.

Die Empfangsgeräte der Teilnehmer überprüfen eine empfangene Nachricht daraufhin, ob sich die Adresse des Teilnehmers in dem durch die gemeinsame Adressierung festgelegten Bereich, wie z.B. der Zeile, der Spalte oder dem Feld der Teilnehmeradressmatrix 340 befindet. Falls dies der Fall ist, ist der entsprechende Teilnehmer Adressat der Nachricht. Um den Empfangseinrichtungen anzuzeigen, ob die gemeinsame Adressierung beispielsweise die Angabe einer Zeilennummer, einer Spaltenummer oder eines Feldes enthält, kann die Adressierungseinrichtung der Nachricht eine entsprechende Beziehungsartangabe hinzufügen.

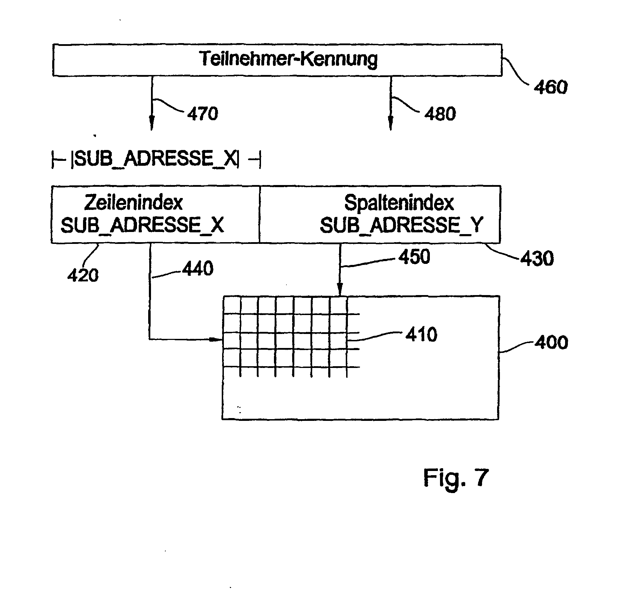

Bezugnehmend auf Fig. 7 wird näher beschrieben, wie die Adressierungseinrichtung 310 unter Verwendung der Teilnehmeradressmatrix Teilnehmer adressieren kann. Lediglich zur Veranschaulichungszwecken zeigt Fig. 7 eine zweidimensionale Teilnehmeradressmatrix 400. In der Teilnehmeradressmatrix 400 sind alle Teilnehmer des Systems einem unterschiedlichen Element der Teilnehmeradressmatrix 400 zugeordnet, wobei in Fig. 7 lediglich ein Teil der Teilnehmermatrix 400 gezeigt ist. In dem vorliegenden Fall sind die Teilnehmer in der Teilnehmeradressmatrix 400 derart angeordnet bzw. den Matrixelementen derart zugeordnet, dass die Teilnehmer, die sich in einer Zeile der Teilnehmeradressmatrix 400 befinden, der selben Teilnehmergruppe angehören, wie z.B. der Gruppe von Teilnehmern gleicher Dienste, wie z.B. Sportkanal oder Moviekanal. Zur eindeutigen Adressierung eines Teilnehmers 410 ist folglich lediglich die Angabe des entsprechenden Zeilenindexes SUB_ADRESSE_X (SUB = Subscriber = Teilnehmer) 420 sowie des Spaltenindexes SUB_ADRESSE_Y 430 erforderlich, wie es durch Pfeile 440 und 450 angezeigt ist. Zur Adressierung eines Teilnehmers 410 beispielsweise in einer EMM-Nachricht werden der Zeilenindex 420 und der Spaltenindex 430 derart zusammengefasst, dass die höherwertigen Bits den Zeilenindex 420 und die übrigen Bits den Spaltenindex 430 darstellen.

Die Länge bzw. die Stellenzahl des Zeilenindexes 420 und Spaltenindexes 430 zur Definition einer Teilnehmeradresse 410 ist abhängig von der Definition der Teilnehmeradressmatrix 400 bzw. der Länge derselben entlang der verschiedenen Dimensionen. Im folgenden soll |SUB_ADRESSE_X| die Länge bzw. Stellenzahl des Zeilenindexes SUB_ADRESSE_X in Bits darstellen, während |SUB_ADRESSE_Y| die Länge des Spaltenindexes SUB_ADRESSE_Y in Bits darstellen soll. Da, wie im Vorhergehenden erwähnt, in dem vorliegenden Fall der Zeilenindex 420 einer bestimmten Teilnehmergruppe zugeordnet ist, hängt die Länge des Zeilenindexes 420 von der Anzahl von zu unterscheidenden Teilnehmergruppen in dem System ab bzw. der Anzahl von Zeilen ab. In dem Fall beispielsweise, dass die Zeilen der Teilnehmeradressmatrix 400 Gruppen von Teilnehmern gleicher Dienste enthalten, entspricht die Länge des Zeilenindexes 420 der zur dualen Darstellung der Anzahl von Diensten notwendigen Stellenzahl und wird in Verbindung mit der Freischaltung des Dienstes einmalig an alle Systemteilnehmer übertragen und auf deren Smartcards gespeichert. Bei Bedarf bzw. bei steigender Anzahl von Diensten kann die auf den Smartcards gespeicherte Stellenzahl aktualisiert werden. In weiteren an diese Smartcards gerichteten EMM-Nachrichten, die sich auf einen bereits freigeschalteten Dienst beziehen, ist daher die Angabe der Länge des Zeilenindexes aus Effizienzgründen nicht mehr erforderlich.

Die Länge der Teilnehmeradressmatrix 400 entlang der Spaltenindexdimension ist entsprechend der variablen Anzahl von Teilnehmern in dem System variabel. Die Länge des Spaltenindexes 430 ist ebenfalls variabel und durch die erfindungsgemäße Kodierung an den Wert des Spaltenindizes angepasst, wie es im Vorhergehenden beschrieben worden ist. Um dies zu erzielen wird der Spaltenindex 430 durch die Vorrichtung von Fig. 2 geeignet kodiert. Insgesamt wird eine Teilnehmeradresse als der Parameter folglich in ein Codewort kodiert, das aus einem Teil mit variabler Länge, d.h. dem Spaltenindex 430, und einem Teil mit fester Länge, d.h. dem Zeilenindex 420, besteht. Der Zeilenindex 420 und der Spaltenindex 430 ergeben eine eindeutige Teilnehmerkennung 460 für den Teilnehmer 410, wie es in Fig. 7 durch Pfeile 470 und 480 dargestellt ist. Bei einer EMM-Nachricht, die an einen einzelnen Teilnehmer 410 gerichtet ist, muss die vollständige Teilnehmerkennung 460 aus Zeilenindex 420 und Spaltenindex 430 verwendet werden.

Bei dem im Vorhergehenden beschriebenen Ausführungsbeispiel wird folglich eine Kombination der Vorrichtungen von Fig. 2 und Fig. 6 gebildet, die es ermöglicht, einerseits die erforderliche Kanalkapazität innerhalb jeder Nachricht zu verringern und andererseits die Anzahl von zu versendenden Nachrichten für eine an eine Mehrzahl von Teilnehmern gerichtete Nachricht zu reduzieren. Auf diese Weise wird die erforderliche Kanalkapazität erheblich verringert.

Bezugnehmend auf das zuletzt beschriebene Ausführungsbeispiel wird darauf hingewiesen, dass, obwohl im Vorhergehenden beschrieben worden ist, dass die Anordnung der Teilnehmer in der mehrdimensionalen Teilnehmeradressmatrix derart vorgenommen wird, dass Teilnehmer mit gemeinsamem Attribut in einer Zeile, d.h. in einer Aneinanderreihung, bzw. einer Ebene angeordnet sind, Teilnehmer mit einem gemeinsamen Attribut ferner in anderen vorbestimmten Beziehungen zueinander angeordnet sein können. Es kann beispielsweise vorgesehen sein, Teilnehmer, denen ein erstes Attribut gemeinsam ist, in einer Zeile anzuordnen, und Teilnehmer, denen ein zweites Attribut gemeinsam ist, in der selben Zeile, aber lediglich in Spalten mit geradzahligem Spaltenindex anzuordnen. Auf diese Weise könnten beispielsweise alle Teilnehmer, denen das Attribut 1 und zugleich das Attribut 2 gemeinsam ist, dadurch adressiert werden, dass angezeigt wird, dass nur die Teilnehmer adressiert sind, die in der entsprechenden Zeile und in einer Spalte mit geradzahligem Spaltenindex angeordnet sind. Es könnte eine weitere vorbestimmte Beziehung darin bestehen, dass die Summe aus Zeilenindex und Spaltenindex ein beliebiges Vielfaches einer natürlichen Zahl ist.

Obwohl im Vorhergehenden jeder Zeile bzw. Ebene einer Teilnehmeradressmatrix ein Attribut zugewiesen worden ist, ist es möglich, Teilnehmer, denen zwei verschiedene Attribute gemeinsam sind, in einer vorbestimmten Beziehung zueinander anzuordnen, wie z.B. alle Teilnehmer, die den Dienst A und B abonniert haben, in einer Zeile.

Es wird ferner darauf hingewiesen, dass, obwohl im Vorhergehenden eine gemeinsame Adressierung der Mehrzahl von Teilnehmern unter Ausnutzung der Beziehung der Teilnehmer darin bestand, einen Zeilenabschnitt zu definieren bzw. eine Zeilennummer und zwei Spaltennummern anzugeben oder ein Feld zu definieren, die gemeinsame Adressierung auch anders durchgeführt werden kann. In dem Fall, dass beispielsweise alle Teilnehmer mit einem gemeinsamen Attribut adressiert werden sollen und dass dieselben in einer zweidimensionalen Teilnehmeradressmatrix derart angeordnet sind, dass die Summe aus Zeilen- und Spaltenindex ein ganzzahliges Vielfaches einer natürlichen Zahl ist, kann die gemeinsame Adressierung dieser Teilnehmer durch Angabe der natürlichen Zahl durchgeführt werden. In dem Fall, dass sich die zu adressierenden Teilnehmer in einer Zeile befinden, kann es ausreichend sein, den Zeilenindex anzugeben.

Bezugnehmend auf die gemeinsame Adressierung durch Angabe eines Feldes, wie es bezugnehmend auf Fig. 6 beschrieben wurde, wird darauf hingewiesen, dass auch bei einer höherdimensionalen Teilnehmeradressmatrix ein Feld durch zwei Matrixpositionen definiert werden kann, wobei sich die Adressaten entlang jeder Dimension zwischen den beiden Matrixpositionen befinden.

Ferner wird darauf hingewiesen, dass im Vorhergehenden lediglich zum leichteren Verständnis zwei- und dreidimensionale Matrizen verwendet wurden. Bei einer größeren Anzahl von unterschiedlichen Attributen kann es jedoch sinnvoll sein, die Anzahl von Dimensionen der Teilnehmeradressmatrix zu erhöhen. In diesem Fall können die vorbestimmten Beziehungen, in denen die Teilnehmer in der Matrix angeordnet werden, komplexer als im Vorhergehenden erwähnt sein.

Bezugnehmend auf die Beschreibung von Fig. 6 und 7 wird ferner darauf hingewiesen, dass in den Meldungen und Nachrichten Anweisungen enthalten sein können, die den Empfangseinrichtungen Informationen darüber geben, wie die Beziehung in diesen Nachrichten bzw. Meldungen kodiert ist, wie es im Vorhergehenden anhand einer Beziehungsartangabe exemplarisch beschrieben wurde. Eine weitere Beziehungsartangabe könnte beispielsweise eine Anweisung Zeilenabschnitte_X sein, die den Empfangseinrichtungen anzeigt, dass in der Meldung hinter der Beziehungsartangabe nacheinander die Angabe des Zeilenindexes und daraufhin x-mal zwei Spaltenindizes folgen, die einen Abschnitt dieser Zeile identifizieren, innerhalb dessen sich adressierte Zeilen befinden. Eine weitere Beziehungsartangabe könnte beispielsweise eine Anweisung FELD sein, die anzeigt, dass die gemeinsame Adressierung durch eine Feldangabe bestehend aus zwei Matrixpositionen definiert ist.

Bezugnehmend auf Fig. 7 wird darauf hingewiesen, dass der Aufbau einer Teilnehmeradresse ebenfalls umgekehrt sein kann, so dass der Zeilenindex hinter dem Spaltenindex angeordnet ist. Zudem besteht bei einer höherdimensionalen Teilnehmeradressmatrix der Aufbau einer vollständigen Teilnehmeradresse aus mehr als zwei Indizes.

Ferner wird darauf hingewiesen, dass die im Vorhergehenden beschriebene gemeinsame Adressierung auf verschiedene Adressen eines Teilnehmers anwendbar ist, wie z.B. die Adresse der Smartcard eines Teilnehmers eines Pay-TV-Systems.

Obwohl die vorliegende Erfindung im Vorhergehenden anhand eines Conditional-Access-Systems beschrieben worden ist, ist die vorliegende Erfindung auf alle Bereiche anwendbar, in denen Daten mit einem Parameter verwendet werden müssen, wie z.B. bei Netzwerken, bei den Transaktionen mit bestimmten I-dentifikationsnummern versehen sind. Durch die Anpassung der zur Kodierung des Parameters erforderlichen Stellenzahl bzw. Bitlänge wird die Übertragungskapazität das Übertragungssystems weniger belastet. Zudem ist die vorliegende Erfindung insbesondere bei Systemen vorteilhaft, bei denen die Parameter zunächst nur bestimmte Werte in einem Definitionsbereich annehmen, der sich während der Benutzung des Systems jedoch erweitern kann.

Obwohl im Vorhergehenden beschrieben worden ist, dass sich das Codewort aus einem Präfix und einem Bitwort zusammensetzt, ist es ferner möglich, dass das Präfix an dem Ende des Bitworts als ein Suffix angefügt wird. In diesem Fall werden geeignete Vorkehrungen getroffen, damit bei der Dekodierung das Suffix aus dem Codewort extrahiert werden kann. Die Wertebereiche könnten beispielsweise derart in die Codeworte mit der entsprechenden Stellenzahl kodiert werden, dass das Suffix eindeutig aus dem Codewort extrahiert werden kann.

Es wird ferner darauf hingewiesen, dass, obwohl im Vorhergehenden beschrieben worden ist, dass das Präfix ein Präfix mit unterschiedlicher Länge ist, dasselbe ferner eine feste Stellenzahl aufweisen kann, so dass lediglich eine begrenzte Anzahl von einander zugeordneten Präfixen, Bitlängen und Wertebereichen existieren. Um in diesem Fall die Erweiterbarkeit des kodierbaren Bereichs zu ermöglichen, können Einrichtungen vorgesehen sein, um die Nachschlagtabellen der Empfangseinrichtung durch EMM-Nachrichten intermittierend zu aktualisieren, um die der begrenzten Anzahl von Präfixen zugeordneten Wertebereiche bei Bedarf anzupassen bzw. zu erweitern. Das Präfix kann beispielsweise lediglich ein Bit aufweisen, so dass lediglich zwei unterschiedliche Präfixe und zwei unterschiedliche, denselben zugeordnete Wertebereiche existieren.

Bezugnehmend auf die Stellenzahlen bzw. Bitlängen, die den Präfixen zugeordnet sind, wird darauf hingewiesen, dass dieselben frei wählbar sind. Es ist folglich möglich, dass alle Stellenzahlen, die den Präfixen zugeordnet sind, gleich sind. Es ist ferner möglich, die Wertebereiche anders anzuordnen, als es in Fig. 2 dargestellt ist. Die Wertebereiche können sich überschneiden oder voneinander beabstandet sein. Beispielsweise könnte jeder Wertebereich bei dem Wert 0 beginnen. Zudem müssen nicht notwendigerweise alle Werte innerhalb eines Wertebereichs in das Bitwort kodierbar sein. Innerhalb eines Wertebereichs könnten beispielsweise lediglich diejenigen Werte in das Codewort mit der zugeordneten Stellenzahl kodiert werden, die von dem System verwendet werden, wie z.B. lediglich die geradzahligen Werte. Darüber hinaus können, obwohl im Vorhergehenden beschrieben worden ist, dass die Werte innerhalb eines Wertebereichs durch die binäre Darstellung der Differenz aus den Werten und dem kleinsten Wert des jeweiligen Wertebereichs kodiert werden, dieselben ferner auf eine andere Weise in das Codewort kodiert bzw. abgebildet werden. Insbesondere ist es möglich, dass die Stellenzahl, die einem bestimmten Wertebereich zugeordnet ist, größer als die Stellenzahl ist, die zur Kodierung dieses Wertebereichs mindestens erforderlich wäre.

Im Hinblick auf das beschriebene Conditional-Access-System wird darauf hingewiesen, dass es möglich ist, die Übertragung der Dienste bzw. Nutzdaten und EMM- bzw. ECM-Nachrichten sowohl mittels desselben Übertragungssystems als auch mittels unterschiedlicher Übertragungssysteme durchzuführen.

## Patentansprüche

1. Verfahren zum Kodieren von Datenwörtern in einer Meldung eines Dienstbereitstellungssystems, die zumindest einen Identifizierungsparameter mit einem Wert aufweist, mit folgenden Schritten:
Definieren (100) zumindest zweier Wertebereiche für den Wert des Identifizierungsparameters, wobei jedem Wertebereich eine Stellenzahl zugeordnet ist;
Kodieren (110) des Identifizierungsparameterwerts in ein erstes Bitwort (160) mit der Stellenzahl, die dem Wertebereich zugeordnet ist, in dem der Identifizierungsparameterwert liegt;
Hinzufügen (120) eines zweiten Bitworts (170), das den Wertebereich anzeigt, in dem der Identifizierungsparameterwert liegt, zu dem ersten Bitwort (160) zum Erzeugen eines Codeworts (150) für den Identifizierungsparameter.

2. Verfahren gemäß Anspruch 1, bei dem die zumindest zwei Wertebereiche keinen gemeinsamen Wert aufweisen und zusammen einen zusammenhängenden Bereich von aufeinanderfolgenden Werten abdecken.

3. Verfahren gemäß Anspruch 2, bei dem das zweite Bitwort (170) eines aus einer Mehrzahl von Präfixen mit unterschiedlicher Stellenzahl ist, wobei keines der Mehrzahl von Präfixen Vorsilbe eines anderen der Mehrzahl von Präfixen ist, wobei jedem der zumindest zwei Wertebereiche eines der Mehrzahl von Präfixen zugeordnet ist, und wobei die Stellenzahl jedes der Mehrzahl von Präfixen angibt, in dem wievielten Wertebereich relativ zu dem Wertebereich mit den kleinsten Werten sich der Wert des Parameters befindet.

4. Verfahren gemäß einem der Ansprüche 1 bis 3, bei dem der Identifizierungsparameter eine Teilnehmeradresse, eine Dienstidentifikation oder eine Single-Chipmoduladresse ist.

5. Verfahren gemäß einem der Ansprüche 1 bis 4, bei dem die Anzahl von Werten jedes der zumindest zwei Wertebereiche der maximal darstellbaren Anzahl von Werten entspricht, die durch ein Bitwort (160) mit zugeordneter Stellenzahl kodiert werden können.

6. Verfahren gemäß einem der Ansprüche 1 bis 5, bei dem der Schritt des Kodierens des Identifizierungsparameterwerts in das erste Bitwort (160) das Bilden einer Differenz zwischen dem Identifizierungsparameterwert und einem kleinsten Wert des Wertebereichs, in dem der Identifizierungsparameterwert liegt, und das Darstellen der Differenz in dem ersten Bitwort (160) mit der dem Wertebereich zugeordneten Stellenzahl aufweist.

7. Verfahren gemäß einem der Ansprüche 1 bis 6, bei dem das Dienstbereitstellungssystem eine Mehrzahl von Teilnehmern aufweist, deren Adressen in einer mehrdimensionalen Teilnehmermatrix (340; 400) angeordnet sind, jede Adresse durch einen Index pro Dimension der Teilnehmermatrix (340; 400) definiert ist, und die Länge der Teilnehmermatrix (340; 400) entlang einer Dimension variabel ist, und wobei der zumindest eine Identifizierungsparameter eine Teilnehmeradresse ist, das Codewort einen Teil (420) mit fester Stellenzahl und einen Teil (430) mit variabler Stellenzahl aufweist, der Index für die Dimension mit variabler Länge der Teil des Codeworts ist, der eine variable Stellenzahl aufweist, und die restlichen Indizes den anderen Teil desselben bilden.

8. Vorrichtung zum Kodieren von Datenwörtern in einer Meldung eines Dienstbereitstellungssystems, die zumindest einen Identifizierungsparameter mit einem Wert aufweist, mit folgenden Merkmalen:
einer Einrichtung (100) zum Definieren zumindest zweier Wertebereiche für den Wert des Identifizierungsparameters, wobei jedem Wertebereich eine Stellenzahl zugeordnet ist;
einer Einrichtung (110) zum Kodieren des Identifizierungsparameterwerts in ein erstes Bitwort (160) mit der Stellenzahl, die dem Wertebereich zugeordnet ist, in dem der Identifizierungsparameterwert liegt; und
einer Einrichtung (120) zum Hinzufügen eines zweiten Bitworts (170), das den Wertebereich anzeigt, in dem der Identifizierungsparameterwert liegt, zu dem ersten Bitwort (160) zum Erzeugen eines Codeworts (150) für den Identifizierungsparameter.

9. Vorrichtung gemäß Anspruch 8, bei der die zumindest zwei Wertebereiche keinen gemeinsamen Wert aufweisen und zusammen einen zusammenhängenden Bereich von aufeinanderfolgenden Werten abdecken.

10. Vorrichtung gemäß Anspruch 9, bei der das zweite Bitwort (170) eines aus einer Mehrzahl von Präfixen mit unterschiedlicher Stellenzahl ist, wobei keines der Mehrzahl von Präfixen Vorsilbe eines anderen der Mehrzahl von Präfixen ist, wobei jedem der zumindest zwei Wertebereiche eines der Mehrzahl von Präfixen zugeordnet ist, und wobei die Stellenzahl jedes der Mehrzahl von Präfixen angibt, in dem wievielten Wertebereich relativ zu dem Wertebereich mit den kleinsten Werten sich der Wert des Identifizierungsparameters befindet.

11. Vorrichtung gemäß einem der Ansprüche 8 bis 10, bei der der zumindest eine Identifizierungsparameter eine Teilnehmeradresse, eine Dienstidentifikation oder eine Single-Chipmoduladresse ist.

12. Vorrichtung gemäß einem der Ansprüche 8 bis 11, bei der die Anzahl von Werten jedes der zumindest zwei Wertebereiche der maximal darstellbaren Anzahl von Werten entspricht, die durch ein Bitwort (160) mit zugeordneter Stellenzahl kodiert werden können.

13. Vorrichtung gemäß einem der Ansprüche 8 bis 12, bei der die Einrichtung (110) zum Kodieren des Identifizierungsparameterwerts in das erste Bitwort folgende Merkmale aufweist:
eine Einrichtung zum Bilden einer Differenz zwischen dem Identifizierungsparameterwert und einem kleinsten Wert des Wertebereichs, in dem der Identifizierungsparameterwert liegt; und
einer Einrichtung zum Darstellen der Differenz in dem ersten Bitwort mit der dem Wertebereich zugeordneten Stellenzahl.

14. Vorrichtung gemäß einem der Ansprüche 8 bis 13, bei der das Dienstbereitstellungssystem eine Mehrzahl von Teilnehmern aufweist, deren Adressen in einer mehrdimensionalen Teilnehmermatrix (340; 400) angeordnet sind, jede Adresse durch einen Index pro Dimension der Teilnehmermatrix (340; 400) definiert ist, und die Länge der Teilnehmermatrix (340; 400) entlang einer Dimension variabel ist, und wobei der zumindest eine Identifizierungsparameter eine Teilnehmeradresse ist, das Codewort einen Teil (420) mit fester Stellenzahl und einen Teil (430) mit variabler Stellenzahl aufweist, der Index für die Dimension mit variabler Länge der Teil des Codeworts ist, der eine variable Stellenzahl aufweist, und die restlichen Indizes den anderen Teil desselben bilden.

15. Verfahren zum Dekodieren einer kodierten Meldung eines Dienstbereitstellungssystems, die zumindest ein Codewort (150) für zumindest einen in der Meldung umfassten Identifizierungsparameter mit einem ersten und einem zweiten Bitwort (160, 170) aufweist, wobei in das erste Bitwort (160) der Identifizierungsparameter kodiert ist, wobei der Identifizierungsparameter in einem Wertebereich von zumindest zwei Wertebereichen des Identifizierungsparameters liegt, wobei jedem Wertebereich eine Stellenzahl zugeordnet ist, und wobei das zweite Bitwort (170) dem ersten Bitwort (160) hinzugefügt ist und den Wertebereich angibt, in dem der Identifizierungsparameter liegt, mit folgenden Schritten:
Ermitteln des angegebenen Wertebereichs aus dem zweiten Bitwort;
Bestimmen des Werts des Identifizierungsparameters in dem ermittelten Wertebereich aus dem ersten Bitwort (160) .

16. Verfahren gemäß Anspruch 15, bei dem die zumindest zwei Wertebereiche keinen gemeinsamen Wert aufweisen und zusammen einen zusammenhängenden Bereich von aufeinanderfolgenden Werten abdecken.

17. Verfahren gemäß Anspruch 15 oder 16, bei dem der Schritt des Bestimmens des Werts des Identifizierungsparameters folgenden Teilschritt aufweist:
Addieren des ersten Bitworts und des kleinsten Werts des angegebenen Wertebereichs, um den Wert des Identifizierungsparameters zu erhalten.

18. Vorrichtung zum Dekodieren einer kodierten Meldung eines Dienstbereitstellungssystems, die zumindest ein Codewort (150) für zumindest einen in der Meldung umfassten Identifizierungsparameter mit einem ersten und einem zweiten Bitwort (160, 170) aufweist, wobei in das erste Bitwort (160) der Identifizierungsparameter kodiert ist, wobei der Identifizierungsparameter in einem Wertebereich von zumindest zwei Wertebereichen des Identifizierungsparameters liegt, wobei jedem Wertebereich eine Stellenzahl zugeordnet ist, und wobei das zweite Bitwort (170) dem ersten Bitwort (160) hinzugefügt ist und den Wertebereich angibt, in dem der Identifizierungsparameter liegt, mit folgenden Merkmalen:
einer Einrichtung zum Ermitteln des angegebenen Wertebereichs aus dem zweiten Bitwort;
einer Einrichtung zum Bestimmen des Werts des Identifizierungsparameters in dem ermittelten Wertebereich aus dem ersten Bitwort (160).

19. Vorrichtung gemäß Anspruch 18, bei der die zumindest zwei Wertebereiche keinen gemeinsamen Wert aufweisen und zusammen einen zusammenhängenden Bereich von aufeinanderfolgenden Werten abdecken.

20. Vorrichtung gemäß Anspruch 18 oder 19, bei der die Einrichtung zum Bestimmen des Werts des Identifizierungsparameters folgendes Merkmal aufweist:
eine Einrichtung zum Addieren des ersten Bitworts und des kleinsten Werts des angegebenen Wertebereichs, um den Wert des Identifizierungsparameters zu erhalten.

## Claims

1. Method for encoding data words in a message of a service provision system which comprises at least one identification parameter having a value, comprising:
defining (100) at least two value ranges for the value of the identification parameter, wherein a number of digits is associated to every value range;
encoding (110) the identification parameter value into a first bit word (160) with the number of digits, which is associated to the value range in which the identification parameter is located;
adding (120) a second bit word (170), which indicates the value range in which the identification parameter is located, to the first bit word (160) for generating a code word (150) for the identification parameter.

2. Method according to claim 1, wherein the at least two value ranges have no common value and together cover a continuous range of consecutive values.

3. Method according to claim 2, wherein the second bit word (170) is one of a plurality of prefixes having different numbers of digits, wherein none of the plurality of prefixes is the prefix of another one of the plurality of prefixes, wherein one of the plurality of prefixes is associated to each of the at least two value ranges, and wherein the number of digits of each of the plurality of prefixes indicates, in which value range relative to the value range with the lowest values the value of the parameter is located.

4. Method according to one of claims 1 to 3, wherein the identification parameter is a subscriber address, a service identification or a single chip module address.

5. Method according to one of claims 1 to 4, wherein the number of values of each of the at least two value ranges corresponds to the number of values which may be indicated at maximum which may be encoded by a bit word (160) comprising an associated number of digits.

6. Method according to one of claims 1 to 5, wherein the step of encoding the identification parameter value into the first bit word (160) comprises generating a difference between the identification parameter value and a smallest value of the value range in which the identification parameter value is located, and illustrating the difference in the first bit word (160) with the number of digits associated to the value range.

7. Method according to one of claims 1 to 6, wherein the service provision system comprises a plurality of subscribers whose addresses are arranged in a multidimensional subscriber matrix (340; 400), wherein each address is defined by one index per dimension of the subscriber matrix (340; 400), and wherein the length of the subscriber matrix (340; 400) is variable along one dimension and wherein the at least one identification parameter is a subscriber address, the code word comprises one part (420) having a fixed number of digits and one part (430) having a variable number of digits, the index for the dimension with the variable length is the part of a code word, which comprises a variable number of digits, and the remaining indices form the other part of the same.

8. Device for encoding data words in a message of a service provision system, comprising at least one identification parameter having a value, comprising:
means (100) for defining at least two value ranges for the value of the identification parameter in which a number of digits is associated to every value range;
means (110) for encoding the identification parameter value into a first bit word (160) having the number of digits which is associated to the value range in which the identification parameter is located; and
means (120) for adding a second bit word (170), which indicates the value range in which the identification parameter is located, to the first bit word (160) for generating a code word (150) for the identification parameter.

9. Device according to claim 8, wherein the at least two value ranges have no common value and together cover a continuous range of consecutive values.

10. Device according to claim 9, wherein the second bit word (170) is one of a plurality of prefixes having different numbers of digits, wherein none of the plurality of prefixes is the prefix of another one of the plurality of prefixes, wherein one of the plurality of prefixes is associated to each of the at least two value ranges, and wherein the number of digits of each of the plurality of prefixes indicates, in which value range relative to the value range with the smallest value the value of the identification parameter is located.

11. Device according to one of claims 8 to 10, wherein the at least one identification parameter is a subscriber address, a service identification or a single chip module address.

12. Device according to one of claims 8 to 11, wherein the number of values of each of the at least two value ranges corresponds to the number of values which may be illustrated at maximum which may be encoded by a bit word (160) having an associated number of digits.

13. Device according to one of claims 8 to 12, wherein the means (110) for encoding the identification parameter value into the first bit word comprises:
means for generating a difference between the identification parameter value and a smallest value of the value range in which the identification parameter value is located;
means for illustrating the difference in the first bit word with the number of digits associated to the value range.

14. Device according to one of claims 8 to 13, wherein the service provision system comprises a plurality of subscribers whose addresses are arranged in a multidimensional subscriber matrix (340; 400), wherein each address is defined by one index per dimension of the subscriber matrix (340; 400), and wherein the length of the subscriber matrix (340; 400) is variable along one dimension, and wherein the at least one identification parameter is a subscriber address, the code word comprises one part (420) having a fixed number of digits and one part (430) having a variable number of digits, the index for the dimension with the variable length is the part of the code word, which comprises a variable number of digits, and the remaining indices form the other part of the same.

15. Method for decoding an encoded message of a service provision system comprising at least one code word (150) for at least one identification parameter included in a message having a first and a second bit word (160, 170), wherein the identification parameter is encoded into the first bit word (160), wherein the identification parameter is located in a value range of at least two value ranges of the identification parameter, wherein a number of digits is associated to every value range and wherein the second bit word (170) is added to the first bit word (160) and indicates the value range in which the identification parameter is located, comprising the following steps:
determining the indicated value range from the second bit word,
determining the value of the identification parameter in the determined value range from the first bit word (160) .

16. Method according to claim 15, wherein the at least two value ranges have no common value and together cover a continuous range of consecutive values.

17. Method according to claim 15 or 16, wherein the step of determining the value of the identification parameter comprises the following sub-step:
adding the first bit word and the smallest value of the indicated value range in order to obtain the value of the identification parameter.

18. Device for decoding an encoded message of a service provision system comprising at least one code word (150) for at least one identification parameter included in the message having a first and a second bit word (160, 170), wherein the identification parameter is encoded into the first bit word (160), wherein the identification parameter is located in a value range of at least two value ranges of the identification parameter, wherein a number of digits is associated to every value range and wherein the second bit word (170) is added to the first bit word (160) and indicates the value range in which the identification parameter is located, comprising:
means for establishing the indicated value range from the second bit word;
means for determining the value of the identification parameter in the established value range from the first bit word (160).

19. Device according to claim 18, wherein the at least two value ranges have no common value and together cover a continuous range of consecutive values.

20. Device according to claim 18 or 19, wherein the means for determining the value of the identification parameter comprises:
means for adding the first bit word and the smallest value of the indicated value range in order to obtain the value of the identification parameter.

## Revendications

1. Procédé pour le codage de mots de données dans un message d'un système de mise à disposition de services présentant au moins un paramètre d'identification avec une valeur, aux étapes suivantes consistant à :
définir (100) au moins deux plages de valeurs pour la valeur du paramètre d'identification, à chaque plage de valeurs étant associé un nombre de positions ;
coder (110) la valeur paramétrique d'identification, pour former un premier mot binaire (160) au nombre de positions qui est associé à la plage de valeurs dans laquelle se situe la valeur paramétrique d'identification ;
ajouter (120) au premier mot binaire (160) un deuxième mot binaire (170) qui indique la plage de valeurs dans laquelle se situe la valeur paramétrique d'identification, afin de générer un mot de code (150) pour le paramètre d'identification.

2. Procédé selon la revendication 1, dans lequel les au moins deux plages de valeurs ne présentent pas de valeur commune et couvrent, ensemble, une plage cohérente de valeurs successives.

3. Procédé selon la revendication 2, dans lequel le second mot binaire (170) est l'un parmi une pluralité de préfixes à nombre de positions différent, aucun de la pluralité de préfixes n'étant une syllabe initiale d'un autre de la pluralité de préfixes, à chacune des au moins deux plages de valeurs étant associé l'un de la pluralité de préfixes et le nombre de positions de chacun de la pluralité de préfixes indiquant la plage de valeurs, par rapport à la plage de valeurs aux valeurs les plus petites, dans la quantième se situe la valeur du paramètre.

4. Procédé selon l'une des revendications 1 à 3, dans lequel le paramètre d'identification est une adresse de participant, une identification de service ou une adresse de module à puce unique.

5. Procédé selon l'une des revendications 1 à 4, dans lequel le nombre de valeurs de chacun des au moins deux plages de valeurs correspond au nombre de valeurs maximum pouvant être représenté et pouvant être codé par un mot binaire (160) à nombre de positions associé.

6. Procédé selon l'une des revendications 1 à 5, dans lequel l'étape de codage de la valeur paramétrique d'identification, pour former le premier mot binaire (160), présente la formation d'une différence entre la valeur paramétrique d'identification et une valeur la plus petite de la plage de valeurs dans laquelle se situe la valeur paramétrique d'identification et la représentation de la différence dans le premier mot binaire (160) au nombre de positions associé à la plage de valeurs.

7. Procédé selon l'une des revendications 1 à 6, dans lequel le système de mise à disposition de services présente une pluralité de participants dont les adresses sont disposées dans une matrice de participants multidimensionnelle (340 ; 400), chaque adresse est définie par un indice par dimension de la matrice de participants (340 ; 400) et la longueur de la matrice de participants (340 ; 400) le long d'une dimension est variable et l'au moins un paramètre d'identification étant une adresse de participant, le mot de code présentant une partie (420) à nombre de positions fixe et une partie (430) à nombre de positions variable, l'indice pour la dimension à longueur variable étant la partie du mot de code présentant un nombre de positions variable et les indices restants formant l'autre partie de ce dernier.

8. Dispositif pour le codage de mots de données dans un message d'un système de mise à disposition de services présentant au moins un paramètre d'identification avec une valeur, aux caractéristiques suivantes :
un dispositif (100) destiné à définir au moins deux plages de valeurs pour la valeur du paramètre d'identification, à chaque plage de valeurs étant associé un nombre de positions ;
un dispositif (110) destiné à coder la valeur paramétrique d'identification, pour former un premier mot binaire (160) au nombre de positions qui est associé à la plage de valeurs dans laquelle se situe la valeur paramétrique d'identification ; et
un dispositif (120) destiné à ajouter au premier mot binaire (160) un deuxième mot binaire (170) qui indique la plage de valeurs dans laquelle se situe la valeur paramétrique d'identification, afin de générer un mot de code (150) pour le paramètre d'identification.

9. Dispositif selon la revendication 8, dans lequel les au moins deux plages de valeurs ne présentent pas de valeur commune et couvrent, ensemble, une plage cohérente de valeurs successives.

10. Dispositif selon la revendication 9, dans lequel le second mot binaire (170) est l'un parmi une pluralité de préfixes à nombre de positions différent, aucun de la pluralité de préfixes n'étant une syllabe initiale d'un autre de la pluralité de préfixes, à chacune des au moins deux plages de valeurs étant associé l'un de la pluralité de préfixes et le nombre de positions de chacun de la pluralité de préfixes indiquant la plage de valeurs, par rapport à la plage de valeurs aux valeurs les plus petites, dans la quantième se situe la valeur du paramètre d'identification.

11. Dispositif selon l'une des revendications 8 à 10, dans lequel le paramètre d'identification est une adresse de participant, une identification de service ou une adresse de module à puce unique.

12. Dispositif selon l'une des revendications 8 à 11, dans lequel le nombre de valeurs de chacun des au moins deux plages de valeurs correspond au nombre de valeurs maximum pouvant être représenté et pouvant être codé par un mot binaire (160) à nombre de positions associé.

13. Dispositif selon l'une des revendications 8 à 12, dans lequel le dispositif (110) de codage de la valeur paramétrique d'identification, pour former le premier mot binaire (160), présente les caractéristiques suivantes :
un dispositif destiné à former une différence entre la valeur paramétrique d'identification et une valeur la plus petite de la plage de valeurs dans laquelle se situe la valeur paramétrique d'identification ; et
un dispositif destiné à représenter la différence dans le premier mot binaire au nombre de positions associé à la plage de valeurs.

14. Dispositif selon l'une des revendications 8 à 13, dans lequel le système de mise à disposition de services présente une pluralité de participants dont les adresses sont disposées dans une matrice de participants multidimensionnelle (340 ; 400), chaque adresse est définie par un indice par dimension de la matrice de participants (340 ; 400) et la longueur de la matrice de participants (340 ; 400) le long d'une dimension est variable et l'au moins un paramètre d'identification étant une adresse de participant, le mot de code présentant une partie (420) à nombre de positions fixe et une partie (430) à nombre de positions variable, l'indice pour la dimension à longueur variable étant la partie du mot de code présentant un nombre de positions variable et les indices restants formant l'autre partie de ce dernier.

15. Procédé pour décoder un message codé d'un système de mise à disposition de services présentant au moins un mot de code (150) pour au moins un paramètre d'identification contenu dans le message avec un premier et un deuxième mot binaire (160, 170), le paramètre d'identification étant codé pour former le premier mot binaire (160), le paramètre d'identification se situant dans une plage de valeurs d'au moins deux plages de valeurs du paramètre d'identification, à chaque plage de valeurs étant associé un nombre de positions, et le deuxième mot binaire (170) étant ajouté au premier mot binaire (160) et indiquant la plage de valeurs dans laquelle se situe le paramètre d'identification, aux étapes suivantes consistant à :
déterminer la plage de valeurs indiquée à partir du deuxième mot binaire ;
déterminer la valeur du paramètre d'identification dans la plage de valeurs déterminée à partir du premier mot binaire (160).

16. Procédé selon la revendication 15, dans lequel les au moins deux plages de valeurs ne présentent pas de valeur commune et couvrent, ensemble, une plage cohérente de valeurs successives.

17. Procédé selon la revendication 15 ou 16, dans lequel l'étape de détermination de la valeur du paramètre d'identification présente l'étape partielle suivante consistant à :
additionner le premier mot binaire et la valeur la plus petite de la plage de valeurs indiquée, pour obtenir la valeur du paramètre d'identification.

18. Dispositif pour décoder un message codé d'un système de mise à disposition de services présentant au moins un mot de code (150) pour au moins un paramètre d'identification contenu dans le message avec un premier et un deuxième mot binaire (160, 170), le paramètre d'identification étant codé pour former le premier mot binaire (160), le paramètre d'identification se situant dans une plage de valeurs d'au moins deux plages de valeurs du paramètre d'identification, à chaque plage de valeurs étant associé un nombre de positions, et le deuxième mot binaire (170) étant ajouté au premier mot binaire (160) et indiquant la plage de valeurs dans laquelle se situe le paramètre d'identification, aux caractéristiques suivantes :
un dispositif destiné à déterminer la plage de valeurs indiquée à partir du deuxième mot binaire ;
un dispositif destiné à déterminer la valeur du paramètre d'identification dans la plage de valeurs déterminée à partir du premier mot binaire (160).

19. Dispositif selon la revendication 18, dans lequel les au moins deux plages de valeurs ne présentent pas de valeur commune et couvrent, ensemble, une plage cohérente de valeurs successives.

20. Dispositif selon la revendication 18 ou 19, dans lequel le dispositif destiné à déterminer la valeur du paramètre d'identification présente la caractéristique suivante :
un dispositif destiné à additionner le premier mot binaire et la valeur la plus petite de la plage de valeurs indiquée, pour obtenir la valeur du paramètre d'identification.
